# EUROPEAN PATENT APPLICATION

(11) **EP 1 914 457 A1**
(43) Date of publication of application: **23.04.2008**
(21) Application number: 06782530.7
(22) Date of filing: 09.08.2006
(51) Int. Cl.: F16K 27/00, F16L 19/02, F17C 13/00, F17C 13/04

(54) **FLUID CONTROLLER WITH JOINT**

(30) Priority: 10.08.2005 JP 2005231564
(71) Applicant: FUJIKIN INCORPORATED, Osaka-shi, Osaka 550-0012 (JP)
(72) Inventor: NAKATA, Tomihiro c/o FUJIKIN INCORPORATED, Osaka-shi, Osaka 5500012 (JP); YAMAJI, Michio c/o FUJIKIN INCORPORATED, Osaka-shi, Osaka 5500012 (JP); HARADA, Akihiro c/o FUJIKIN INCORPORATED, Osaka-shi, Osaka 5500012 (JP)
(74) Representative: Paul, Dieter-Alfred
(86) International application number: PCT/JP2006/315714
(87) International publication number: WO 2007/018228

(57) **Abstract**

To provide a fluid controller with a joint, which has a general versatility and can reduce a storage cost and a storage space.

Between a joint 12 and a body 23 of a fluid controller 13, a passage member 14 for communicating both intervenes. The joint 12 is coupled to the passage member 14 by welding. The passage member 14 is coupled with the body 23 of the fluid controller 13 so as to be attachable and detachable by at least one screw member 26.

## Description

### TECHNICAL FIELD

The present invention relates to a fluid controller with a joint for opening and closing a fluid passage and adjusting a flow rate, which is attached to a high-pressure container such as a gas cylinder.,

### BACKGROUND ART

As a valve (a fluid controller) to be attached to a gas cylinder (a high-pressure container), in Patent Document 1, it is disclosed that a female screw is formed on a connection member arranged on the side of the cylinder, a male screw is formed on a body of the valve, and by screwing the both, the cylinder is coupled to the valve.

Normally, on a commercial cylinder, a joint for connection with a valve is provided. However, in the above-mentioned patent document 1, without using this joint, the configuration itself on the side of the cylinder is changed, so that this is not preferable in a point of a general versatility that the valve can be connected to the existing cylinder.

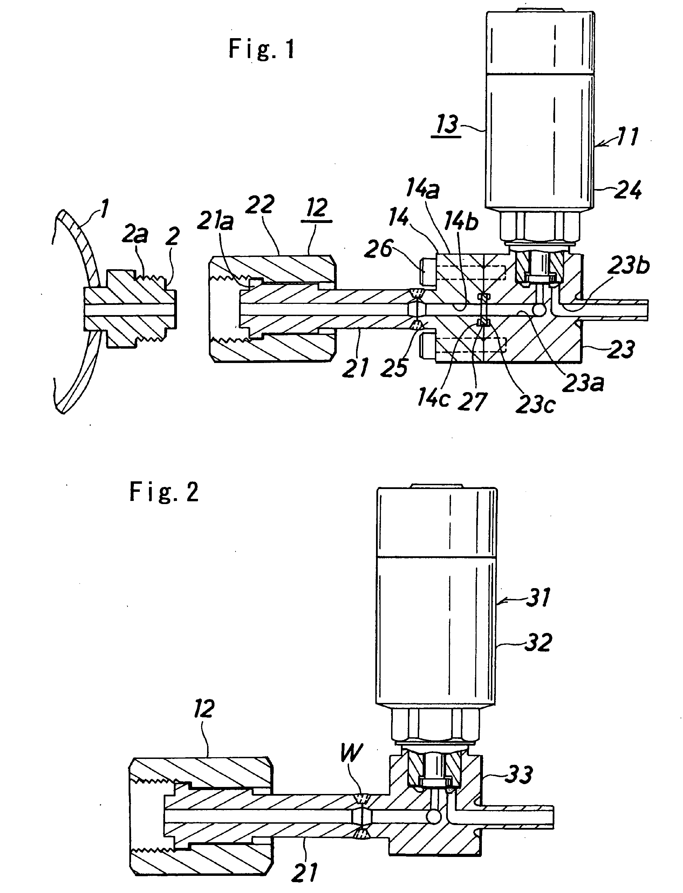

From a point of a general versatility, for example, as shown in Fig. 2, a fluid controller with a joint (31) having a joint (12) corresponding to a joint part of a gas cylinder, in which a sleeve (21) of the joint (12) is coupled to a body (33) of a valve (32) by welding (W) is preferable.
Patent Document 1: Japanese Patent Application Laid-Open No. 2005-16709

### DISCLOSURE OF THE INVENTION

### PROBLEMS TO BE SOLVED BY THE INVENTION

According to the above-described fluid controller with the joint (31) shown in Fig. 2, for example, by repeating attachment and detachment, in a case where a seal defect is generated in the joint (12), replacing for the entire fluid controller with the joint (31) is necessary. It costs much for storage of a fluid controller with a joint for replacement, and further, there is a limitation ina storage space for a replacement part. Therefore, there is a possibility of the problem in that there is no stock for replacement when replacement is needed.

An object of the present invention is to provide a fluid controller with a joint, which has a general versatility and can reduce a storage cost and a storage space.

A fluid controller with a joint according to the present invention is attached to a high-pressure container with a joint part and has a joint corresponding to the joint part of the high-pressure container, wherein a passage member intervenes between the joint and the body of the fluid controller for communicating both; the joint is coupled to the passage member by welding; and the passage member is coupled to the body of the fluid controller so as to be attachable and detachable by at least one screw member.

As a joint and a fluid controller, a publicly-known one (a commercial one) can be used.

A fluid controller is defined as, for example, an on-off-valve and a regulator (a pressure regulator) or the like, however, various valves referred to as a decompression valve and a safety valve or the like and other various devices for controlling and measuring a flow of a fluid can be used.

A joint part with a male screw is normally provided on a high-pressure container (a gas cylinder); a joint provided on the fluid controller is formed in such a manner that a nut is rotatably fitted in a sleeve so as to correspond to this; and the end of the sleeve is welded with the end portion of the passage member. The joint part on the side of the high-pressure container is not limited to the joint part with the male screw but the joint on the side of the fluid controller can be variously modified corresponding to the joint part on the side of the high-pressure container.

A shape of a passage member is a rectangular solid or a substantial rectangular solid, and the passage is a linear shape.

It is preferable that a gasket intervenes in connection portion between the attachable and detachable passage member and the body of the fluid controller so that a sealing characteristic thereof is improved.

According to a fluid controller with a joint of the present invention, in a case where a sealing defect is generated in the joint by repeating attachment and detachment, only the joint and a passage member welded to this can be replaced while the fluid controller being used without change, so that a storage cost and a storage space of parts for replacement can be reduced.

### BRIEF DESCRIPTION OF THE DRAWINGS

Fig. 1 is a partially-notched front view showing an embodiment of a fluid controller with a joint according to the present invention.
Fig. 2 is a partially-notched front view showing a conventional fluid controller with a joint.

### BEST MODE FOR CARRYING OUT THE INVENTION

The embodiment of the present invention will be described below with reference to the drawings.

Fig. 1 shows an embodiment of a fluid controller with a joint (11) according to the present invention.

The fluid controller with the joint (11) is attached to a high-pressure container (1) such as a gas cylinder and is made of a joint (12) having the configuration corresponding to the shape of a joint part (2) of the high-pressure container (1), a fluid controller (13) for controlling a flow of a fluid in the high-pressure container (1), and a passage member (14) intervening between the joint (12) and a body (23) of the fluid controller (13) for communicating both.

A male screw portion (2a) is formed on the joint part (2) of the high-pressure container (1). The joint (12) is formed in such a manner that a cap nut (22) is rotatably fitted in a sleeve (21) with a flange (21a).

The fluid controller (13) is a so-called on-off-valve and is made of the body (23), on which a fluid inflow passage (23a) and a fluid discharge passage (23b) are formed, and an actuator (24) for opening and closing the inter-body passages (23a) and (23b).

In the passage member (14), a fluid passage (14b) is formed on a rectangular solid (14a), and the fluidpassage (14b) linearly connects a fluid passage in the sleeve (21) of the joint (12) to the fluid inflow passage (23a) of the fluid controller (13) .

On a face of the passage member (14) that is faced to the joint (12), a short cylindrical projection portion (25) having the same diameter as the sleeve (21) of the joint (12) is formed and by welding this short cylindrical projection portion (25) with the sleeve (21), the joint (12) and the passage member (14) are coupled.

The passage member (14) and the body (23) of the fluid controller (13) are coupled by four screw members (26). In other words, on the passage member (14), a bolt insertion hole extending in a direction of the passage (14b) is formed so as to surround the passage (14b) and on a face of the body (23) of the fluid controller (13) that is faced to the passage member (14), a female screw corresponding to the bolt insertion hole is formed and a bolt with a hexagonal hole as the screw member (26) is screwed into a female screw of the body (23) of the fluid controller (13) penetrating through the passage member (14), and thereby, the passage member (14) can be coupled to the body (23) of the fluid controller (13) so as to be easily attached or detached.

On a face of the passage member (14) to be faced to the body (23) of the fluid controller (13) and a face of the body (23) of the fluid controller (13) to be faced to the passage member (14), recessed portions for gasket storage (14c) (23c) are formed, respectively, and the body (23) of the fluid controller and the passage member (14) are faced to each other with a gasket (27) stored in this recessed portion (14c) (23c) intervened there between.

The fluid controller with the joint (11) according to the present invention, as shown in Fig. 1, is attached or detached to or from the joint part (2) of the high-pressure container (1) by rotating the cap nut (22) of the joint (12), while the joint (12), the fluid controller (13) and the passage member (14) being coupled. In a case of repeating attachment and detachment, a defect such that the fluid controller with the joint (11) can not be fastened due to scraping of the cap nut (22) and the sleeve (21) or the fluid controller with the joint (11) can not be fixed due to deformation of the gasket (27) or the like may be generated. In this case, unloosing four screw members (26) to couple the passage member (14) with the body (23) of the fluid controller and using the fluid controller (13) without change, only the joint (12) and the passage member (14) welded to this can be replaced. According to a fluid controller with a joint (31) shown in Fig. 2, in a case where a defect is generated in the joint (12), the entire replacement including a fluid controller (32) is necessary and a part for replacement (a fluid controller with a joint) provided when a defect of the joint is generated is relatively large, so that many parts can not be stored for convenience of a cost and a storage space (limited to two or three parts for storage) and a problem such that gas cannot be supplied because there is no part for replacement may occur. On the contrary, according to the fluid controller with the joint (11) of the present invention, the joint (12) can be only replaced, a part for replacement (a joint with a passage member) is compact and is at low cost, and the number of storage canbeincreased, so that a problem such that gas cannot be supplied because there is no part for replacement is prevented and stable supply of gas becomes possible.

### Industrial Applicability

The present invention provides a fluid controller with a joint attached to a high-pressure container such as a gas cylinder for opening and closing a fluid passage and adjusting a flow rate. According to the present invention, in a case where a sealing defect is generated in the j oint by repeating attachment and detachment, a joint and a passage member welded to this can be only replaced while using the fluid controller without change, so that a storage cost and a storage space can be reduced.

### EXPLANATION OF SYMBOLS

- (1): high-pressure container
- (2): joint part of high-pressure container
- (11): fluid controller with joint
- (12): joint
- (13): fluid controller
- (14): passage member
- (23): body of the fluid controller
- (26): bolt with hexagonal hole (screw member)
- (W): welding

## Claims

1. A fluid controller with a joint attached to a high-pressure container with a joint part and having a joint corresponding to the joint part of the high-pressure container, wherein
a passage member intervenes between the joint and the body of the fluid controller for communicating both;
the joint is coupled to the passage member by welding; and
the passage member is coupled to the body of the fluid controller so as to be attachable and detachable by at least one screw member.

2. The fluid controller with the joint according to Claim 1, wherein
a male screw is provided on the joint part of the high-pressure container;
the joint provided on the fluid controller is formed in such a manner that a nut is rotatably fitted in a sleeve; and
the end of the sleeve is welded with the end portion of the passage member.

3. The fluid controller with the joint according to Claim 1, wherein
a gasket intervenes in a connection portion between the passage member and the body of the fluid controller.
